# EUROPÄISCHE PATENTSCHRIFT

(11) **EP 3 860 850 B1**
(45) Veröffentlichungstag und Bekanntmachung des Hinweises auf die Patenterteilung: **30.11.2022**
(21) Anmeldenummer: 19782525.0
(22) Anmeldetag: 26.09.2019
(51) Int. Cl.: B32B 17/10, E04F 11/18

(54) **GLASKONSTRUKTION FÜR BRÜSTUNGS- UND/ODER GELÄNDERVERGLASUNGEN ODER GLASTRÄGER**
GLASS CONSTRUCTION FOR BALUSTRADE GLAZING AND/OR RAILING GLAZING OR GLASS SUPPORTS
STRUCTURE DE VERRE DESTINÉE À DES VERRIÈRES DE GARDE-CORPS ET/OU DE BALUSTRADE OU À DES SUPPORTS DE VERRE

(30) Priorität: 05.10.2018 DE 202018105700 U; 05.10.2018 DE 102018124601
(43) Veröffentlichungstag der Anmeldung: 11.08.2021
(73) Patentinhaber: Sedak GmbH & Co. KG, 86368 Gersthofen (DE)
(72) Erfinder: SCHLÖGL, Fritz, 86391 Stadtbergen (DE)
(74) Vertreter: Trinks, Ole
(86) Internationale Anmeldenummer: PCT/EP2019/076101
(87) Internationale Veröffentlichungsnummer: WO 2020/069983

(56) Entgegenhaltungen:
- WO-A1-2014/098160
- DE-U1-202012 104 033
- US-A1- 2012 219 749
- Anonymous: "Glass edge protection for all-glass railings", Architekturzeitung: Glaskantenschutz für Ganzglasgeländer, 28 August 2014 (2014-08-28), pages 1-6, XP055799928, Retrieved from the Internet: URL:https://www.architekturzeitung.com/inn ovation/fassade-fenster/2565-struktureller -sonnenschutz.html [retrieved on 2021-04-29]

## Beschreibung

Die vorliegende Erfindung betrifft eine Glaskonstruktion insbesondere für Brüstungs- und/oder Geländerverglasungen oder Glasträger.

Es sind Verglasungen bekannt, bei denen die Ränder der Glasscheiben von Rahmenprofilen eingefasst werden. Mittels dieser Rahmenprofile werden die Glasscheiben und damit die Verglasung an jeweils vorhandenen raumfesten Konstruktionsbauteilen befestigt. Solche Verglasungen sind dann zumindest an ihrem oberen und unteren Randbereich entsprechend gelagert und über die Rahmenprofile vor Witterungseinflüsse, insbesondere Feuchtigkeit, sowie vor Stößen geschützt.

Aus der WO 2009/003431 A1 ist ein Glasscheibengeländer bekannt, bei dem die Glasscheiben mit ihrem Fußbereich in einem formstabilen U-Profil eingespannt gehalten werden. Mehrere derartige in einem U-Profil eingespannt gehaltene Glasscheiben werden an ihrem oberen freien Rand durch einen durchgehenden Handlauf miteinander verbunden. Hierbei stellt der Handlauf einen Schutz des oberen freien Randes der in dem U-Profil eingespannt gehaltenen Glasscheiben dar.

Entsprechend der DE 20 2009 013 904 U1 kann ein vergleichbares GlasscheibenGeländer als raumhohe Verglasung eingesetzt werden. Der untere Endbereich der Glasscheibe kann dazu in einem formstabilen U-Profil eingespannt gehalten werden, während der obere Endbereich der Glasscheibe zwischen zwei oberen Konstruktionsteilen befestigt werden kann. Die beiden oberen Konstruktionsteile sind plattenförmig ausgebildet und können mittels zumindest zweier Schrauben zug- und druckfest aneinander befestigt werden.

Die Druckschrift DE 20 2012 104 033 U1 betrifft eine Haltevorrichtung für eine Brüstungs- oder Geländerplatte, insbesondere eine Glasplatte, mit einem an einem Bauwerk befestigbaren Halteprofil mit zwei parallel zueinander aufragenden Profilschenkeln und mit mehreren Klemmelementen, die einen deformierbaren Distanzkörper aufweisen, zum Einspannen eines Fußbereichs der Platte zwischen den Profilschenkeln des Halteprofils.

Die Druckschrift WO 2014/098160 A1 betrifft eine Glaskonstruktion mit einem als Glaslaminat ausgebildeten Verbundelement, welches aus mindestens zwei Glasscheiben besteht, die durch eine klebefähige Zwischenschicht verbunden sind. https:// www.architekturzeitung.com/innovation/fassade-fenster/2565-struktureller-sonnenschutz.html offenbart eine Glaskonstruktion nach dem Oberbegriff des Anspruchs 1.

Der Baustoff Glas ist als Gestaltungselement zeitgenössischer Architektur kaum mehr wegzudenken. Die fortlaufende Weiterentwicklung der Produktions- und Verarbeitungstechnologie und die stetige Verbesserung anwendungsreifer Produkte spielen eine entscheidende Rolle dabei, gestiegenen funktionalen Anforderungen sowie der Suche nach neuen ästhetischen Ausdrucksformen gerecht zu werden.

Beim Einsatz von insbesondere großformatigen Glaskonstruktionen für Brüstungs- und/oder Geländerverglasungen können einzelne Glaseinheiten jedoch eine Herausforderung im Hinblick auf die Widerstandsfähigkeit gegen mechanische und chemische Beanspruchungen darstellen. Brüstungs- und/oder Geländerverglasungen weisen in der Regel mindestens ein als Glaslaminat ausgebildetes Flächenelement auf, welches aus mindestens zwei Glasscheiben besteht, die durch eine klebefähige Zwischenschicht aus Kunststoff miteinander verbunden sind. Werden derartige Flächenelemente beispielsweise als Brüstungs- und/oder Geländerverglasung insbesondere im Außenbereich eingesetzt, so sind diese insbesondere statischen und dynamischen Belastungen ausgesetzt, die unter Umständen sich negativ auf die Bewitterung durch ultraviolette Strahlung, hohe Temperatur und hohe Luftfeuchtigkeit auswirken. Insbesondere wurde bei Glaslaminaten, welche hoher Luftfeuchtigkeit ausgesetzt waren, eine signifikante Abnahme der Biegesteifigkeit festgestellt. Hierbei zeigte sich ein großer Einfluss des Feuchtegehalts der Kunststoff-Zwischenschicht des Glaslaminats auf die Materialverhalten "Haftung und Zugeigenschaft". Dies kann insbesondere dann problematisch werden, wenn die Glaskonstruktion als ein lasttragender Glasträger dient.

Um von daher ein als Glaslaminat ausgebildetes Flächen- oder Verbundelement insbesondere im Außenbereich dauerhaft als Brüstungs- und/oder Geländerverglasung oder als lasttragender Glasträger einsetzen zu können, ist es notwendig, die klebefähige(n) Kunststoff-Zwischenschicht(en), welche die mindestens zwei Glasscheiben des Glaslaminats zusammenhält/zusammenhalten, entsprechend temperatur- und witterungsbeständig auszuführen, um eine notwendige Kantenstabilität des Glaslaminats zu erreichen.

Bei aus dem Stand der Technik bekannten Glaslaminaten ist insbesondere keine langfristige Kantenstabilität in Bezug auf Witterungseinflüsse und Delaminationseffekte erzielbar. Bei der freien Bewitterung der Kanten der auf dem Markt befindlichen Glaslaminate ist nach einer gewissen Zeit insbesondere immer eine Delamination sowie eine Auffeuchtung der als Verbundmaterial dienenden Zwischenschicht aus Kunststoff feststellbar, sodass es unvermeidlich ist, dass nach einer gewissen Zeit am Scheibenrand eine Eintrübung auftritt. Diese Effekte treten abhängig von den klimatischen Bedingungen umso früher ein, je länger die Kanten des Glaslaminats hohen Temperaturen und hoher Luftfeuchtigkeit ausgesetzt sind.

Bei hoher Umgebungsfeuchte nimmt dabei die klebefähige Zwischenschicht aus Kunststoff verstärkt Wasser auf und lagert dieses in dem Kunststoffgefüge ein. Bei Affinität zwischen polaren Gruppen der Polymermoleküle und dem Dipol des Wassermoleküls wird Wasser teils im freien Volumen, teils zwischen den schwach gebundenen Molekülketten eingelagert, was im letzteren Fall zur Quellung des Kunststoffes führt. Dieser Prozess ist in der Regel reversibel, denn bei der Trocknung der Kunststoff-Zwischenschicht wird das Wasser unter Schrumpfung des Kunststoffes wieder ausgeschieden. Allerdings entstehen bei der Quellung oder Schrumpfung Eigenspannungen, welche zu Mikrorissen führen können.

Von daher unterliegt die Kunststoff-Zwischenschicht des als Glaslaminat ausgebildeten Flächenelements einer irreversiblen Alterung. Dieser zeitabhängige Einfluss auf das Material der Kunststoff-Zwischenschicht betrifft insbesondere den Kantenbereich des Glaslaminats.

Zum Schutz gegen Alterung, insbesondere durch thermische oder solare Oxidation ist es denkbar, dem Kunststoffmaterial der Zwischenschicht in geringen Mengen Stabilisatoren hinzuzufügen. Die beiden wichtigsten Gruppen dieser Additive sind Antioxidantien zur Bindung und Deaktivierung der bei der Oxidation entstehenden Radikalen sowie UV-Stabilisatoren zur Absorption der Strahlung, Bindung von Radikalen sowie Deaktivierung energetisch angeregter Molekülgruppen.

Allerdings kann der Einfluss von Feuchtigkeit nicht durch das Hinzufügen von geeigneten Stabilisatoren reduziert oder minimiert werden.

Insbesondere kann Feuchtigkeit aufgrund der mikroskopischen Eigenschaften der derzeit im Bauwesen eingesetzten Folien für Zwischenschichten einen entscheidenden Einfluss auch auf das Tragverhalten des Glaslaminats haben. Über die offene Kante eines Glaslaminats, zum Beispiel durch freie Bewitterung der Kante oder durch falsche Umgebungsbedingungen, kann Feuchtigkeit in den Folienzwischenraum gelangen. Weicht der Feuchtgehalt vom optimalen Feuchtegehalt der Folie ab, kann dies eine starke negative Veränderung des Materialverhaltens und der Belastbarkeit der Folie bewirken. Zu beachten ist, dass Feuchtigkeit zwar in den Randbereich eines Glaslaminats nur um einige Zentimeter eindiffundieren kann, dies hat in der Regel jedoch bereits negative Auswirkungen zumindest auf das Erscheinungsbild. Durch Feuchte bedingte Schadensbilder sind häufig durch Blasenbildung, Farbveränderungen (Eintrübung) und großflächige Delamination (Ablösungen) gekennzeichnet.

Von daher wurde im Bauwesen, und insbesondere im Objektbau bislang davon häufig abgesehen, Brüstungs- und/oder Geländerverglasungen mit einer frei bewitterbaren Kante einzusetzen. Dies wurde als "natürliche" Grenze im Objektbau angesehen, was die Verwendung von Glasmaterial angeht. Vielmehr wurden bislang Glasscheibengeländer so konstruiert, dass auch der obere "freie" Rand bzw. die obere "freie" Kante des Glaslaminats von einem Metall- oder Kunststoff-Profil eingespannt gehalten wird, wobei dieses Metall- oder Kunststoff-Profil auch als Handlauf ausgebildet sein kann. Ein derartiges Metall- oder Kunststoff-Profil an der oberen "freie" Kante des Glaslaminats wirkt sich aber negativ auf das Gesamterscheinungsbild der Geländerverglasung aus.

Ausgehend von dieser Situation liegt der Erfindung die Aufgabe zugrunde, eine Glaskonstruktion für Brüstungs- und/oder Geländerverglasungen oder für lasttragende Glasträger anzugeben, bei welcher das existierende Vorurteil der Fachwelt überwunden werden kann.

Insbesondere soll eine Glaskonstruktion mit einem als Glaslaminat ausgebildeten Flächen- oder Verbundelement angegeben werden, welches aus mindestens zwei Glasscheiben besteht, die durch eine klebefähige Zwischenschicht aus Kunststoff verbunden sind, wobei das Glaslaminat dieser Glaskonstruktion auch bei einer dauerhaften freien Bewitterung selbst nach längerer Zeit keine durch Feuchte bedingte Schadensbilder zeigt.

Erfindungsgemäß wird diese Aufgabe durch den Gegenstand des unabhängigen Patentanspruchs 1 gelöst, wobei vorteilhafte Weiterbildungen der Glaskonstruktion in den abhängigen Ansprüchen angegeben sind.

Demgemäß betrifft die Erfindung insbesondere eine Glaskonstruktion für Brüstungs- und/oder Geländerverglasungen oder für Glasträger mit einem als Glaslaminat ausgebildeten Flächen- oder Verbundelement. Das als Glaslaminat ausgebildete Flächen- oder Verbundelement besteht aus mindestens zwei Glasscheiben, die durch eine klebefähige Zwischenschicht aus Kunststoff verbunden sind. Erfindungsgemäß ist vorgesehen, dass mindestens eine Kante des Flächen- oder Verbundelements, und insbesondere die obere Kante des Flächen- oder Verbundelements, welche einer freien Bewitterung ausgesetzt ist, einen Kantenschutz aufweist, welcher derart zumindest bereichsweise mit den jeweiligen Stirnflächen der mindestens zwei Glasscheiben verbunden ist, dass wirksam die Zwischenschicht aus Kunststoff vor Feuchtigkeitseinflüssen geschützt ist.

Bei der erfindungsgemäßen Glaskonstruktion ist vorgesehen, dass der Kantenschutz als Glasleiste aus einem glasklaren Material gebildet ist und mit einem insbesondere glasklaren Dichtmittel derart auf die mindestens eine Kante des Flächen- oder Verbundelements laminiert ist, dass die jeweiligen Stirnseiten der mindestens zwei Glasscheiben und die Stirnseite der Zwischenschicht von dem insbesondere glasklaren Dichtmittel benetzt und insbesondere umschlossen sind.

Diese Art der Auflaminierung des Kantenschutzes auf die zu schützende Glaskante hat den Vorteil, dass einerseits die klebefähige Kunststoff-Zwischenschicht zwischen den mindestens zwei Glasscheiben des Glaslaminats dauerhaft vor Feuchtigkeitseinflüssen geschützt ist, und dass andererseits die Kante des Flächen- oder Verbundelements vor mechanischen Belastungen, insbesondere Stößen etc., wirksam geschützt ist und so ein mechanisches Delaminieren vermieden wird. Mit anderen Worten, bei dieser Ausführungsform dient der Kantenschutz als "Opfermaterial" wenn beispielsweise ein Gegenstand auf die Kante fällt.

Darüber hinaus bildet ein aus einem glasklaren Material gebildeter Kantenschutz, welcher mit Hilfe eines glasklaren Dichtmittels auf die zu schützende Kante auflaminiert ist, den Vorteil, dass selbst bei unmittelbarer Draufsicht auf die Kante die Kunststoff-Klebeschicht zwischen den Glasscheiben des Glaslaminats nicht mehr erkennbar ist. Von daher bietet sich die Glaskonstruktion insbesondere als archetektonisches Highlight an, beispielsweise bei einer Brüstungs- oder Geländerverglasung.

Bei der erfindungsgemäßen Glaskonstruktion ist vorgesehen, dass das vorzugsweise glasklare Dichtmittel zumindest teil- oder bereichsweise durch einen über die mindestens eine Kante des Flächen- oder Verbundelements herausstehenden Bereich der klebefähigen Zwischenschicht gebildet wird. Bei dieser Ausführungsform kann u.U. auf zusätzliche Dichtmittel verzichtet werden. Dabei wird der über die mindestens eine Kante des Flächen- oder Verbundelements herausstehende Bereich der klebefähigen Zwischenschicht entsprechend gefaltet, so dass der Bereich der Zwischenschicht die jeweiligen Stirnseiten der mindestens zwei Glasscheiben des Glaslaminats zumindest bereichsweise umschließt.

Besonders bevorzugt ist in diesem Zusammenhang vorgesehen, dass die Zwischenschicht bzw. Zwischenschichten des Flächen- oder Verbundelements zumindest teil- oder bereichsweise aus einem Ionoplast-Polymer oder einem Material mit ähnlichen Materialeigenschaften gebildet ist, wie beispielsweise hochfestes Polyvinylbutyral (PVB). Gegenüber herkömmlichen PVB-Zwischenschichten ist eine Zwischenschicht aus hochfestem Polyvinylbutyral oder eine Ionoplast- Zwischenschicht wesentlich zäher und steifer, sodass das Flächen- oder Verbundelements auch bei einem größeren Lasteintrag, insbesondere Gewicht, nicht labil wird, sondern insgesamt statisch selbsttragend stabil bleibt.

Alternativ hierzu ist es aber auch denkbar, dass die die Zwischenschicht Polyvinylbutyral (PVB), Ethylenvinylacetat (EVA), Polyacrylat (PA), Polymethylmethacrylat (PMMA) und/oder Polyurethan (PUR) aufweist. Derartige Materialien für die Zwischenschicht können insbesondere dann gewählt werden, wenn die Glaskonstruktion nur geringe Lasten aufnehmen muss.

Wenn zusätzlich oder alternativ zu der Zwischenschicht ein weiteres Dichtmittel verwendet wird, bietet es sich an, Acryl, Butyl, Silikon und/oder Polyurethan zu verwenden. Wie auch das Material der Zwischenschicht ist das Material des weiteren Dichtmittels - sollte dieses denn verwendet werden - insbesondere glasklar ausgeführt.

Grundsätzlich ist es denkbar, wenn die als Kantenschutz verwendete Glasleiste eine Breite aufweist, welche zumindest im Wesentlichen übereinstimmt mit der Dicke des Flächen- oder Verbundelements. Auf diese Weise wird ein fast unsichtbarer stetiger Abschluss des Flächen- oder Verbundelements erreicht.

Alternativ hierzu ist es aber auch denkbar, für die Glasleiste eine Breite zu wählen, welche größer und insbesondere deutlich größer als die Dicke des Flächen- oder Verbundelements ist. In diesem Fall käme der Glasleiste eine weitere Funktion zu, wie beispielsweise der Funktion eines Handlaufs.

Gemäß einer anderen Realisierung der erfindungsgemäßen Glaskonstruktion ist hingegen vorgesehen, dass das Flächen- oder Verbundelement ein innenliegendes Glaslaminat aus mindestens zwei über eine Zwischenschicht verbundene Glasscheiben aufweist, wobei das innenliegende Glaslaminat vorzugsweise beidseitig jeweils über eine Zwischenschicht mit mindestens einer außenliegenden Glasscheibe oder einem außenliegenden Glaslaminat verbunden ist. Bei dieser Ausführungsform bietet es sich an, wenn die Glasleiste derart auf die mindestens eine Kante des Flächen- oder Verbundelements laminiert ist, dass vorzugsweise nur die Stirnseite des innenliegenden Glaslaminats zumindest bereichsweise von der Glasleiste überdeckt wird.

Ferner bietet es sich bei dieser Ausführungsform an, dass zum Auflaminieren der Glasleiste nicht alle Zwischenschichten des Glaslaminats verwendet werden, sondern beispielsweise nur eine einzige Zwischenschicht, welche bereichsweise über die mindestens eine Kante des Flächen- oder Verbundelements heraussteht, wobei der herausstehende Bereich der klebefähigen Zwischenschicht entsprechend gefaltet wird, so dass der Bereich der Zwischenschicht die jeweiligen Stirnseiten der einzelnen Glasscheiben des Glaslaminats zumindest bereichsweise umschließt.

Die erfindungsgemäße Glaskonstruktion eignet sich insbesondere als Glaskonstruktion für ein Geländer oder als Glasträger bei Gebäudeteilen, wie beispielsweise Balkone, Galerien, Treppen, Podeste, Terrassen und dergleichen im Innen- und Außenbereich.

Insofern betrifft die vorliegende Erfindung ferner ein entsprechendes Geländer bzw. einen entsprechenden Glasträger mit einer Glaskonstruktion der zuvor genannten Art.

Nachfolgend werden unter Bezugnahme auf die beiliegenden Zeichnungen exemplarische Ausführungsformen der erfindungsgemäßen Glaskonstruktion näher beschrieben.

Es zeigen:
- FIG. 1: schematisch in einer Querschnittsansicht eine nicht zur Erfindung gehörende Ausführungsform einer Glaskonstruktion;
- FIG. 2: schematisch und in einer Querschnittsansicht eine erste exemplarische Ausführungsform der erfindungsgemäßen Glaskonstruktion; und;
- FIG. 3: schematisch und in einer Querschnittsansicht eine zweite exemplarische Ausführungsform der erfindungsgemäßen Glaskonstruktion.

Trotz der in der Fachwelt bekannten Risiken werden Brüstungs- und Geländerverglasungen und lasttragende Glasträger immer wieder aus Verbundsicherheitsglas mit der offenen Laminationskante nach oben frei bewittert eingebaut. Die Dauerhaftigkeit dieser frei bewitterten Kante wird immer wieder von Fachberatern ausgiebig diskutiert. Dabei kann durch zu lange auf der Kante stehende Flüssigkeit/Feuchtigkeit die Verbundfolie (= Kunststoff-Zwischenschicht) unansehnlich werden oder Schaden annehmen und delaminieren.

Diese derzeitigen Nachteile sollen behoben werden, indem auf die freie dem Wetter ausgesetzte Kante ein Glasstreifen aufgesetzt wird. Die dauerhafte Abdeckung der freien Verbundkante wird insbesondere durch das Aufsetzen eines polierten Glasstreifens bewirkt. Selbstverständlich wäre das Aufsetzen von Metall streifen, wie zum Beispiel aus Titan oder Edelstahl, als technische Variante auch denkbar.

Das Verwenden von Glas oder Titan als Kantenschutz hat den zusätzlichen Vorteil, dass es keine Längenunterschiede durch Temperaturwechsel gibt wie beispielsweise, wenn Edelstahlstreifen verwendet werden.

Die erfindungsgemäße Glaskonstruktion 100 eignet sich vorzugsweise als Geländer für Gebäudeteile, wie Balkone, Galerien, Treppen, Podeste, Terrassen und dergleichen im Innen- und Außenbereich. Die Glaskonstruktion 100 weist ein als Glaslaminat ausgebildetes Flächen- oder Verbundelement 10 auf. Das Flächen- oder Verbundelement 10 besteht aus mindestens zwei Glasscheiben 13, die durch eine klebefähige Zwischenschicht 14 aus Kunststoff miteinander verbunden sind.

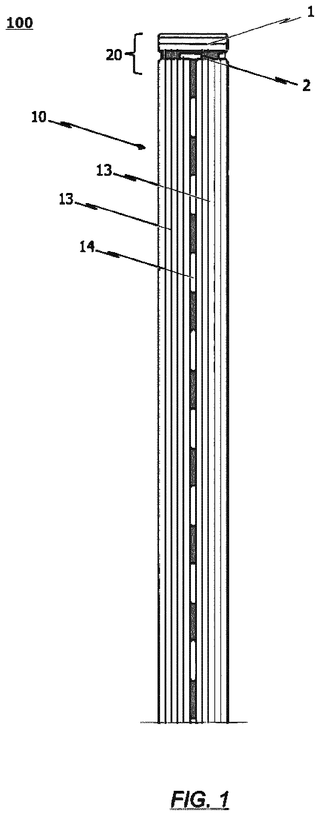

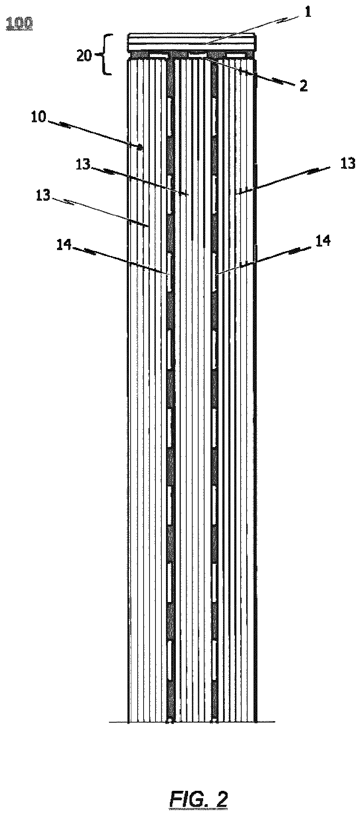

Bei der in FIG. 1 schematisch dargestellten und nicht zur beanspruchten Erfindung gehörenden Ausführungsform weist das als Glaslaminat ausgebildete Flächen- oder Verbundelement 10 genau zwei Glasscheiben 13 auf, während bei der in FIG. 2 gezeigten Ausführungsform insgesamt drei Glasscheiben 13 mit entsprechenden Kunststoff-Zwischenschichten 14 das Glaslaminat ausbilden.

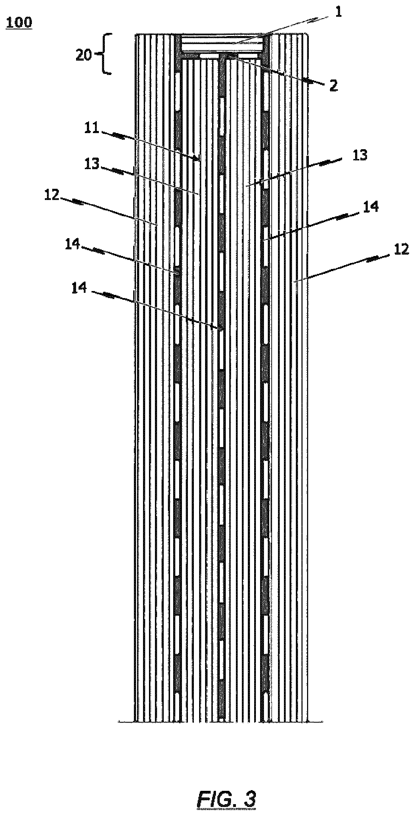

Hingegen ist in FIG. 3 eine Ausführungsform der erfindungsgemäßen Glaskonstruktion 100 gezeigt, bei der das Flächen- oder Verbundelement 10 ein innenliegendes Glaslaminat 11 aus zwei über eine Zwischenschicht 14 verbundene Glasscheiben 13 aufweist, wobei das innenliegende Glaslaminat 11 beidseitig jeweils über eine Zwischenschicht 14 mit einer außenliegenden Glasscheibe 12 verbunden ist.

Die in den Zeichnungen gezeigten Ausführungsformen der Glaskonstruktion 100 haben gemeinsam, dass zumindest die obere Kante 20 des Flächen- oder Verbundelements 10 einen auflaminierten Kantenschutz 1 aufweist, um diese Kante 20 des Flächen- oder Verbundelements 10 vor mechanischen Einflüssen und - insbesondere bei einer freien Bewitterung - vor Feuchtigkeit zu schützen. Insbesondere ist der Kantenschutz 1 derart auf die Kante 20 des Flächen- oder Verbundelements 10 auflaminiert, dass die Zwischenschicht/Zwischenschichten 14 zwischen den Glasscheiben 13 des Glaslaminats vor Feuchtigkeitseinflüssen geschützt ist/sind.

Bei der in FIG. 3 gezeigten Ausführungsform ist dabei der Kantenschutz 1 derart auf die Kante 20 des Flächen- oder Verbundelements 10 auflaminiert, dass vorzugsweise nur die Stirnseite des innenliegenden Glaslaminats 11 zumindest bereichsweise von dem Kantenschutz 1 überdeckt wird.

Bei den in den Zeichnungen gezeigten Ausführungsformen ist der Kantenschutz 1 als insbesondere polierte Glasleiste aus einem glasklaren Material ausgebildet, wobei diese Glasleiste vorzugsweise mit einem glasklaren Dichtmittel 2 auf die zu schützende Kante 20 des Glaslaminats auflaminiert ist. Das Dichtmittel 2 kann beispielsweise Acryl, Butyl, Silikon und/oder Polyurethan aufweisen und ist insbesondere glasklar ausgeführt.

Als Zwischenschicht 14 kommen unterschiedliche Materialien zum Einsatz. Besonders gute Ergebnisse können erzielt werden, wenn die Zwischenschicht 14 Polyvinylbutyral (PVB), Ethylenvinylacetat (EVA), Polyacrylat (PA), Polymethylmethacrylat (PMMA) und/oder Polyurethan (PUR) aufweist. Die Zwischenschicht 14 ist vorzugsweise transparent und glasklar. Gemäß Ausführungsformen kann die Zwischenschicht 14 aber auch gefärbt oder mit Motiven bedruckt sein.

Gemäß Ausführungsformen ist insbesondere vorgesehen, dass dem Material der Kunststoff-Zwischenschicht 14 mindestens ein Stabilisator hinzugefügt ist, insbesondere ein Antioxidant und/oder ein UV-Stabilisator, um die Kunststoff-Zwischenschicht 14 auch vor UV-Strahlung bzw. vor einer Alterung durch UV-Strahlung zu schützen.

Durch die erfindungsgemäße Lösung kann die Dauerhaftigkeit des Geländers viel sicherer gewährleistet werden. Der hohe ästhetische Anspruch an die obere Sichtkante, die dadurch keinerlei Versätze der Einzelgläser oder Unterbrechungen durch die Verbundfolie hat, ist ein weiterer Vorteil.

Insbesondere eignet sich die erfindungsgemäße Lösung auch für Glasträger, bei denen mindestens eine Stirnseite im Außenbereich liegt. Indem diese Stirnseite mit einem Kantenschutz der erfindungsgemäßen Art überdeckt wird, wird eine im Hinblick auf ein Verbinden, insbesondere Verkleben mit anderen Bauteilen optimale Oberfläche geschaffen. Über die auf die Stirnkanten der einzelnen Glasscheiben des Glaslaminats auflaminierte Glasleiste wird eine optimale Kraftübertragung von dem anderen Bauteil in den Glasträger bzw. die Glasscheiben des Glasträgers erreicht, da die auflaminierte Glasleiste die in die Glasleiste eingeleitete Kraft umlenkt bzw. gezielt in die Glasscheiben des Glasträgers einleitet.

### Bezugszeichenliste

- 1: Kantenschutz/Glasleiste
- 2: Dichtmittel
- 10: Flächen- oder Verbundelement/Glaslaminat
- 11: innenliegendes Flächen- oder Verbundelement/Glaslaminat
- 12: außenliegendes Flächen- oder Verbundelement/Glasscheibe
- 13: Glasscheibe des Glaslaminats
- 14: Zwischenschicht/Verbundfolie
- 100: Glaskonstruktion

## Patentansprüche

1. Glaskonstruktion (100) für Brüstungs- und/oder Geländerverglasungen oder Glasträger mit einem als Glaslaminat ausgebildeten Verbundelement (10), welches aus mindestens zwei Glasscheiben (13) besteht, die durch eine klebefähige Zwischenschicht (14) aus Kunststoff verbunden sind, wobei mindestens eine Kante (20) des Verbundelements (10) einen Kantenschutz (1) aufweist, welcher derart zumindest bereichsweise mit den jeweiligen Stirnflächen der mindestens zwei Glasscheiben (13) des Glaslaminats verbunden ist, dass die Zwischenschicht (14) vor Feuchtigkeitseinflüssen geschützt ist, wobei der Kantenschutz (1) eine Glasleiste aufweist, welche über ein Dichtmittel (2) zumindest bereichsweise mit der mindestens einen Kante (20) des Verbundelements (10) verbunden ist,
**dadurch gekennzeichnet, dass**
der Kantenschutz (1) aus einem glasklaren Material gebildet ist und mit einem vorzugsweise glasklaren Dichtmittel (2) derart zumindest bereichsweise mit der mindestens einen Kante (20) des Verbundelements (10) verbunden ist, dass die jeweiligen Stirnseiten der mindestens zwei Glasscheiben (13) des Glaslaminats und
die Stirnseite der Zwischenschicht (14) von dem vorzugsweise glasklaren Dichtmittel (2) benetzt und insbesondere umschlossen sind, und dass
das vorzugsweise glasklare Dichtmittel (2) zumindest teil- oder bereichsweise gebildet wird durch einen über die mindestens eine Kante (20) des Verbundelements herausstehenden Bereich der klebefähigen Zwischenschicht (14).

2. Glaskonstruktion (100) nach Anspruch 1,
wobei die Glasleiste eine Breite aufweist, welche zumindest im Wesentlichen übereinstimmt mit der Dicke des Verbundelements (10).

3. Glaskonstruktion (100) nach Anspruch 1,
wobei die Glasleiste eine Breite aufweist, welche größer, insbesondere deutlich größer als die Dicke des Verbundelements (10) ist.

4. Glaskonstruktion (100) nach Anspruch 1,
wobei die Glasleiste eine Breite aufweist, welche kleiner als die Dicke des Verbundelements (10) ist, wobei die Glasleiste derart mit der mindestens einen Kante (20) des Verbundelements (10) verbunden ist, dass die Glasleiste die Stirnseite von mindestens einer Zwischenschicht (14) zwischen zwei Glasscheiben (13) überdeckt.

5. Glaskonstruktion (100) nach Anspruch 4,
wobei das Verbundelement (10) ein innenliegendes Glaslaminat (11) aus mindestens zwei über eine Zwischenschicht (14) verbundene Glasscheiben (13) aufweist, wobei das innenliegende Glaslaminat vorzugsweise beidseitig jeweils über eine Zwischenschicht (14) mit mindestens einer außenliegenden Glasscheibe (12) oder einem außenliegenden Glaslaminat verbunden ist.

6. Glaskonstruktion (100) nach Anspruch 5,
wobei die Glasleiste derart auf die mindestens eine Kante (20) des Verbundelements (10) laminiert ist, dass vorzugsweise nur die Stirnseite des innenliegenden Glaslaminats (11) zumindest bereichsweise von der Glasleiste überdeckt wird.

7. Glaskonstruktion (100) nach einem der Ansprüche 1 bis 6,
wobei das Dichtmittel (2) Acryl, Butyl, Silikon und/oder Polyurethan aufweist und insbesondere glasklar ausgeführt ist.

8. Glaskonstruktion (100) nach einem der Ansprüche 1 bis 7,
wobei die Zwischenschicht (14) Polyvinylbutyral (PVB), Ethylenvinylacetat (EVA), Polyacrylat (PA), Polymethylmethacrylat (PMMA) und/oder Polyurethan (PUR) aufweist und vorzugsweise transparent, gefärbt oder mit Motiven bedruckt ist.

9. Glaskonstruktion (100) nach einem der Ansprüche 1 bis 7,
wobei die Zwischenschicht (14) ein Ionoplast-Polymer aufweist und insbesondere als Ionoplast-Folie ausgeführt ist und vorzugsweise transparent, gefärbt oder mit Motiven bedruckt ist.

10. Glaskonstruktion (100) nach einem der Ansprüche 1 bis 7,
wobei die Zwischenschicht (14) aus einem Gießharz gebildet ist.

11. Glaskonstruktion (100) nach einem der Ansprüche 1 bis 10,
wobei dem Material der Zwischenschicht (14) mindestens ein Stabilisator hinzugefügt ist, insbesondere ein Antioxidant und/oder ein UV-Stabilisator.

12. Verwendung einer Glaskonstruktion (100) nach einem der Ansprüche 1 bis 11 als Glasträger und/oder Geländer für Gebäudeteile, wie Balkone, Galerien, Treppen, Podeste, Terrassen und dergleichen im Innen- und/oder Außenbereich.

13. Geländer oder Glasträger für Gebäudeteile, wie bei Balkone, Galerien, Treppen, Podeste, Terrassen und dergleichen im Innen- und/oder Außenbereich mit einer Glaskonstruktion (100) nach einem der Ansprüche 1 bis 11, insbesondere
wobei eine untere Kante (20) der Glaskonstruktion (100) mit einem Tragprofil verbunden oder verbindbar ist, und wobei zumindest die gegenüberliegende obere Kante (20) der Glaskonstruktion (100) den Kantenschutz (1) aufweist.

## Claims

1. A glass construction (100) for balustrade glazing and/or railing glazing or glass supports having a composite element (10) designed as a glass laminate consisting of at least two glass panes (13) connected by an adhesive plastic interlayer (14), wherein at least one edge (20) of the composite element (10) exhibits an edge protector (1) which is at least partially connected to the respective end faces of the at least two glass panes (13) of the glass laminate such that the interlayer (14) is protected from the effects of moisture, wherein the edge protector (1) comprises a glass strip at least partially connected to the at least one edge (20) of the composite element (10) by means of a sealant (2),
**characterized in that**
the edge protector (1) is formed from a crystal-clear material and is at least partially connected to the at least one edge (20) of the composite element (10) by a preferably crystal-clear sealant (2) such that the respective end faces of the at least two glass panes (13) of the glass laminate and the end face of the interlayer (14) are wetted and in particular enclosed by the preferably crystal-clear sealant (2),
and that
the preferably crystal-clear sealant (2) is at least in part or partially formed by an area of the adhesive interlayer (14) which projects over the at least one edge (20) of the composite element.

2. The glass construction (100) according to claim 1,
wherein the glass strip exhibits a width which at least substantially coincides with the thickness of the composite element (10).

3. The glass construction (100) according to claim 1,
wherein the glass strip exhibits a width which is greater, in particular considerably greater, than the thickness of the composite element (10).

4. The glass construction (100) according to claim 1,
wherein the glass strip exhibits a width which is less than the thickness of the composite element (10), wherein the glass strip is connected to the at least one edge (20) of the composite element (10) such that the glass strip covers the end face of at least one interlayer (14) between two glass panes (13).

5. The glass construction (100) according to claim 4,
wherein the composite element (10) comprises an internal glass laminate (11) of at least two glass panes (13) connected by an interlayer (14), wherein preferably both sides of the internal glass laminate are connected to at least one external glass pane (12) or external glass laminate by means of a respective interlayer (14).

6. The glass construction (100) according to claim 5,
wherein the glass strip is laminated onto the at least one edge (20) of the composite element (10) such that preferably only the end face of the internal glass laminate (11) is at least partially covered by the glass strip.

7. The glass construction (100) according to one of claims 1 to 6,
wherein the sealant (2) comprises acrylic, butyl, silicone and/or polyurethane and is in particular of crystal-clear rendering.

8. The glass construction (100) according to one of claims 1 to 7,
wherein the interlayer (14) comprises polyvinyl butyral (PVB), ethylene vinyl acetate (EVA), polyacrylate (PA), polymethyl methacrylate (PMMA) and/or polyurethane (PUR) and is preferably transparent, colored or printed with motifs.

9. The glass construction (100) according to one of claims 1 to 7,
wherein the interlayer (14) comprises an ionoplast polymer and is in particular rendered as an ionoplast film and preferably transparent, colored or printed with motifs.

10. The glass construction (100) according to one of claims 1 to 7,
wherein the interlayer (14) is formed from a casting resin.

11. The glass construction (100) according to one of claims 1 to 10,
wherein at least one stabilizer is added to the material of the interlayer (14), in particular an antioxidant and/or a UV stabilizer.

12. Use of a glass construction (100) according to one of claims 1 to 11 as a glass support and/or railing for indoor and/or outdoor building elements such as balconies, galleries, stairs, landings, terraces and the like.

13. A railing or glass support for indoor and/or outdoor building elements such as balconies, galleries, stairs, landings, terraces and the like comprising a glass construction (100) according to one of claims 1 to 11,
in particular wherein a lower edge (20) of the glass construction (100) is connected or connectable to a support profile, and wherein at least the opposite upper edge (20) of the glass construction (100) comprises the edge protector (1).

## Revendications

1. Construction en verre (100) pour des vitrages de balustrade et/ou de garde-corps ou des supports de verre comprenant un élément composite (10) qui est réalisé sous forme de stratifié de verre et qui se compose d'au moins deux vitres (13) reliées par une couche intermédiaire (14) en matière plastique apte à être collée,
dans laquelle au moins un bord (20) de l'élément composite (10) présente une protection de bord (1) qui est reliée au moins localement aux chants respectifs desdites au moins deux vitres (13) du stratifié de verre de telle sorte que la couche intermédiaire (14) est protégée des influences de l'humidité, la protection de bord (1) comprend une parclose qui est reliée au moins localement audit au moins un bord (20) de l'élément composite (10) par l'intermédiaire d'un moyen d'étanchéité (2),
**caractérisée en ce que**
la protection de bord (1) est constituée d'un matériau clair comme le verre et est reliée au moins localement audit au moins un bord (20) de l'élément composite (10) par l'intermédiaire d'au moins un moyen d'étanchéité (2), de préférence clair comme le verre, de telle sorte que les chants respectifs desdites au moins deux vitres (13) du stratifié de verre et le chant de la couche intermédiaire (14) sont mouillés et en particulier entourés par le moyen d'étanchéité (2) de préférence clair comme le verre,
et **en ce que** le moyen d'étanchéité (2), de préférence clair comme le verre, est formé au moins partiellement ou localement par une zone de la couche intermédiaire (14) apte à être collée, laquelle dépasse au-delà dudit au moins un bord (20) de l'élément composite.

2. Construction en verre (100) selon la revendication 1,
dans laquelle la parclose présente une largeur qui correspond au moins sensiblement à l'épaisseur de l'élément composite (10).

3. Construction en verre (100) selon la revendication 1,
dans laquelle la parclose présente une largeur supérieure, en particulier nettement supérieure, à l'épaisseur de l'élément composite (10).

4. Construction en verre (100) selon la revendication 1,
dans laquelle la parclose présente une largeur inférieure à l'épaisseur de l'élément composite (10), la parclose étant reliée audit au moins un bord (20) de l'élément composite (10) de telle sorte que la parclose recouvre le chant d'au moins une couche intermédiaire (14) entre deux vitres (13).

5. Construction en verre (100) selon la revendication 4,
dans laquelle l'élément composite (10) présente un stratifié de verre intérieur (11) composé d'au moins deux vitres (13) reliées par une couche intermédiaire (14), le stratifié de verre intérieur étant relié de préférence de part et d'autre à au moins une vitre extérieure (12) ou à un stratifié de verre extérieur par une couche intermédiaire (14) respective.

6. Construction en verre (100) selon la revendication 5,
dans laquelle la parclose est stratifiée sur ledit au moins un bord (20) de l'élément composite (10) de telle sorte que, de préférence, seul le chant du stratifié de verre intérieur (11) est recouvert au moins localement par la parclose.

7. Construction en verre (100) selon l'une des revendications 1 à 6,
dans laquelle le moyen d'étanchéité (2) présente de l'acrylique, du butyle, du silicone et/ou du polyuréthane et est en particulier clair comme le verre.

8. Construction en verre (100) selon l'une des revendications 1 à 7,
dans laquelle la couche intermédiaire (14) comprend du poly(butyral de vinyle) (PVB), de l'éthylène-acétate de vinyle (EVA), du polyacrylate (PA), du polyméthacrylate de méthyle (PMMA) et/ou du polyuréthane (PUR) et est de préférence transparente, colorée ou imprimée avec des motifs.

9. Construction en verre (100) selon l'une des revendications 1 à 7,
dans laquelle la couche intermédiaire (14) présente un polymère ionoplaste et est en particulier réalisée sous forme de film ionoplaste et est de préférence transparente, colorée ou imprimée avec des motifs.

10. Construction en verre (100) selon l'une des revendications 1 à 7,
dans laquelle la couche intermédiaire (14) est formée d'une résine de coulée.

11. Construction en verre (100) selon l'une des revendications 1 à 10, dans laquelle au moins un stabilisant, en particulier un antioxydant et/ou un stabilisant UV, est ajouté au matériau de la couche intermédiaire (14).

12. Utilisation d'une construction en verre (100) selon l'une des revendications 1 à 11 comme support de verre et/ou garde-corps pour des éléments de bâtiment, tels que des balcons, des galeries, des escaliers, des paliers, des terrasses et similaires à l'intérieur et/ou à l'extérieur.

13. Garde-corps ou support de verre pour des éléments de bâtiment, tels que des balcons, des galeries, des escaliers, des paliers, des terrasses et similaires à l'intérieur et/ou à l'extérieur, comportant une construction en verre (100) selon l'une des revendications 1 à 11,
dans lequel, en particulier, un bord inférieur (20) de la construction en verre (100) est relié ou peut être relié à un profilé porteur, et au moins le bord supérieur (20) opposé de la construction en verre (100) présente la protection de bord (1).
